# EUROPÄISCHE PATENTSCHRIFT

(11) **EP 0 969 408 B1**
(45) Veröffentlichungstag und Bekanntmachung des Hinweises auf die Patenterteilung: **18.09.2002**
(21) Anmeldenummer: 99110626.1
(22) Anmeldetag: 02.06.1999
(51) Int. Cl.: H01R 13/24, H01R 12/16, G06K 7/00, G06K 19/077

(54) **Kontaktträger**
Contact carrier
Support de contact

(30) Priorität: 02.07.1998 DE 19829551
(43) Veröffentlichungstag der Anmeldung: 05.01.2000
(73) Patentinhaber: AMPHENOL-TUCHEL ELECTRONICS GmbH, D-74080 Heilbronn (DE)
(72) Erfinder: Schnell, Thomas, 74078 Heilbronn (DE); Braun, Gerhard, 74626 Bretzfeld-Bitzfeld (DE)
(74) Vertreter: Becker, Thomas, Dr., Dipl.-Ing.

(56) Entgegenhaltungen:
- EP-A- 0 827 240
- DE-U- 9 407 499

## Beschreibung

Die Erfindung betrifft einen Kontaktträger mit mehreren Kontakten, wie er beispielsweise innerhalb eines Chipkartenlesers Verwendung findet.

Üblicherweise sind die Kontakte mit einem Ende zur Kontaktierung zugehöriger Leiterbahnen einer dem Kontaktträger zugeordneten gedruckten Schaltung ausgebildet und stehen mit ihrem anderen, freien Ende über die einer zugehörigen Chipkarte zugewandte Oberfläche des Kontaktträgers vor.

Derartige Kontaktträger sowie zugehörige Chipkartenleser und Chipkarten sind aus dem Stand der Technik bekannt (DE 41 18 312 C2; DE 44 11 345 C1).

Die Kontakte sind dabei nach Art einer Blattfeder gestaltet und an ihrem der Chipkarte zugewandten Kontaktende brückenartig verformt.

Chipkartenleser haben die Aufgabe, die Kontakte des auf einer zugehörigen Karte angeordneten elektronischen Chips in einer bestimmten (End)position der Karte im Leser zu kontaktieren, um so ein "Lesen" der Informationen des Chips, gegebenenfalls aber auch ein Eingeben von Informationen in die Chipkarte zu ermöglichen.

Chipkartenleser der genannten Art werden zum Beispiel in stationären Kartentelefonen, Mobiltelefonen, Geldautomaten oder dergleichen eingesetzt.

Bei diesen Anwendungen steht in der Regel nur sehr wenig Raum für den Kontaktträger und die zugehörigen Kontakte zur Verfügung. Dies gilt insbesondere für solche Kontaktträger, die mit sehr kleinen Karten, beispielsweise sogenannten SIM-Karten, kontaktiert werden.

In der DE 94 07 499 U1 (entsprechend US 5,527,192 A) wird dazu ein elektrisches Kontaktelement vorgeschlagen, dessen Kontaktabschnitt in zwei Richtungen gewölbt ausgebildet ist, wodurch sich für den Kontaktabschnitt eine "löffelartige" Geometrie ergibt, weshalb diese Kontakte auch "Löffelkontakte" genannt werden. Diese geometrische Gestaltung der Kontaktzonen der Kontakte schafft eine erhöhte Kontaktierungs-Sicherheit. Nachteilig ist jedoch, daß die in zwei Richtungen konvex gewölbten Kontaktabschnitte die freien Kontaktenden bilden und insofern allenfalls in Axialrichtung des jeweils anschließenden Führungsabschnitts jedes Kontaktes eine gewisse Stabilität aufweisen.

Die eingangs genannten räumlichen Verhältnisse beim Einsatz derartiger Kontaktträger machen es von Fall zu Fall jedoch erforderlich, eine zugehörige Chipkarte nicht nur in Axialrichtung der Führungsabschnitte der Kontakte zu bewegen, sondern auch in anderen Richtungen, beispielsweise 90 oder 180° versetzt.

Der Erfindung liegt insoweit die Aufgabe zugrunde, einen Kontaktträger der eingangs genannten Art anzubieten, der bei kleiner Bauform eine hohe Kontaktierungs-Sicherheit auch bei unterschiedlichen Zuführpositionen einer Chipkarte ermöglicht.

Die Erfindung geht zunächst von der Überlegung aus, daß die vorstehend beschriebenen "Löffelkontakte" bezüglich ihrer doppelt konvex gestalteten Kontaktabschnitte dazu grundsätzlich geeignet sind, weil diese Kontakte "umlaufend" Auflaufflächen für eine zugehörige Chipkarte und deren Kontakte bereitstellen.

Ausgehend von der vorgenannten Aufgabe ist es jedoch notwendig, die Kontakte so im Kontaktträger zu konfektionieren, daß sie im wesentlichen ausschließlich senkrecht, bezogen auf die Ebene, entlang der die Chipkarte zugeführt wird, bewegbar sind. Diese Richtung kann auch durch die Ausrichtung einer Achse definiert werden, die durch den jeweiligen Scheitelpunkt der löffelartig gestalteten Kontaktabschnitte der Kontakte verläuft.

In diesem Zusammenhang hat die Erfindung weiter erkannt, daß eine entsprechende Führung der weiteren Kontaktabschnitte innerhalb des Kontaktträgers notwendig ist.

Danach betrifft die Erfindung in ihrer allgemeinsten Ausführungsform einen Kontaktträger mit mehreren Kontakten, die jeweils mit einem löffelartig gewölbten Kontaktabschnitt über eine erste Oberfläche des Kontaktträgers vorstehen, wobei mindestens ein, an den jeweiligen Kontaktabschnitt anschließender Führungsabschnitt jedes Kontaktes so gestaltet und im Kontaktträger geführt ist, daß die Kontakte ausschließlich entlang einer im wesentlichen senkrecht durch einen Scheitelpunkt des jeweiligen Kontaktabschnitts verlaufenden Achse bewegbar sind.

Konkret kann dies nach einer Ausführungsform dadurch erfolgen, daß die Kontakte auf einer Seite des Kontaktabschnittes mit einem ersten Führungsabschnitt ausgebildet sind, der in einer ersten Führungsaufnahme des Kontaktträgers einliegt, die den betreffenden Kontakt in einer Richtung führt, die entlang zu der durch den Scheitelpunkt des Kontaktabschnitts verlaufenden Achse verläuft und in Verlängerung des ersten Führungsabschnitts auf der gegenüberliegenden Seite des Kontaktabschnitts mit einem zweiten Führungsabschnitt ausgebildet sind, der in einer zweiten Führungsaufnahme des Kontaktträgers einliegt, die den betreffenden Kontakt in einer Richtung entlang zur Führungsrichtung des ersten Führungsabschnitts, jedoch in derselben Ebene, führt.

Daraus ergibt sich, ausgehend von einem x, y, z-Koordinatensystem eine im wesentlichen spielfreie Führung (Festlegung) der jeweiligen Führungsabschnitte in x- und y-Richtung, jedoch eine Beweglichkeit (Federung) der Kontakte (Kontaktabschnitte) in z-Richtung.

Hierdurch wird es möglich, eine Chipkarte in beliebiger Richtung in bezug auf die Kontaktanordnung zuzuführen, ohne daß die Gefahr besteht, daß die Kontakte in einer Ebene parallel zur Ausrichtung der Chipkarte bewegt (verschoben) werden. Vielmehr wird die Bewegungsrichtung der Kontakte (Kontaktabschnitte) auf eine Richtung beschränkt, die senkrecht (normal) zur Oberfläche des Kontaktträgers beziehungsweise Chipkarte verläuft.

Dabei kann der, am freien Ende der Kontakte ausgebildete Führungsabschnitt beispielsweise senkrecht zu dem auf der anderen Seite des Kontaktabschnittes ausgebildeten Führungsabschnitt verlaufen, so daß der jeweilige Kontakt an seinem Kontaktende in der Aufsicht im wesentlichen eine T-Form besitzt.

Korrespondierend hierzu sind Ausnehmungen beziehungsweise Führungsschlitze für die jeweiligen Kontakte (Führungsbschnitte) im Kontaktträger ausgebildet. Dabei können die Kontakte außerhalb ihrer Kontakt- und Führungsabschnitte zusätzlich mechanisch geführt bzw. fixiert sein, um eine zusätzliche Verdreh- und Lösesicherheit zu schaffen.

Weiter kann der quer verlaufende freie (zweite) Führungsabschnitt beispielsweise unter Vorspannung (in Richtung auf die Chipkarte) mit seiner Oberseite gegen entsprechende, gehäuseseitige Anschläge im Kontaktträger anliegen. Eine solche Ausführungsform zeigt die nachfolgende Figurenbeschreibung.

Die erwähnte Vorspannung der Kontakte im Bereich der Kontaktabschnitte schafft neben der geometrischen Ausbildung der Kontaktabschnitte und der daran angeschlossenen Führungsabschnitte eine hohe Funktionssicherheit eines entsprechend ausgebildeten Kontaktträgers.

Diese Vorspannung läßt sich besonders einfach einstellen, wenn die Kontakte, ausgehend von ihrem mit dem Kontaktabschnitt ausgebildeten Ende mäanderförmig gestaltet sind. Sie können bei der Montage im Kontaktträger dann so eingesetzt werden, daß die Kontakte mit einem mäanderförmigen endseitigen Abschnitt in eine entsprechende Aufnahme des Kontaktträgers gedrückt werden und dabei gleichzeitig eine Vorspannung erfolgt, indem beispielsweise der am freien Ende der Kontakte angeordnete zweite Führungsabschnitt entlang korrespondierender Abschnitte des Kontaktträgers vorgespannt wird.

Dabei können die Kontakte außerhalb ihrer Kontakt- und Führungsabschnitte auch über Rastmittel im Kontaktträger positioniert werden. In diesem Fall werden die Kontakte nachträglich in den Kontaktträger mechanisch eingesetzt. Es ist aber auch möglich, die Kontakte bei der Herstellung des in der Regel aus (elektrisch isolierendem) Kunststoff bestehenden Kontaktträgers unmittelbar mit einzubringen (zu umspritzen).

Zwischen dem Anschlußbereich des Kontaktabschnittes und dem gegenüberliegenden zweiten Ende können die Kontakte verbreitert sein, wodurch ihre Lebensdauer, Verdrehsicherheit und der Kraftverlauf verbessert werden.

Diese Formgebung läßt sich vorteilhaft bei allen Üförmigen Kontakten realisieren. Der Verbindungsschenkel ist dann gegenüber den beiden freien Schenkeln breiter und die Breite der freien Schenkel kann sich vom Verbindungsschenkel in Richtung auf die freien Enden wieder verjüngen, wodurch die freien Schenkel in der Aufsicht zumindest abschnittsweise eine Trapezform aufweisen.

Für das gegenüberliegende, zweite Kontaktende, welches üblicherweise auf einer zugehörigen Leiterplatte verklebt oder verlötet wird, sind beispielsweise folgende Ausführungsformen denkbar:

Die Kontakte können mit ihrem, dem jeweiligen Kontaktabschnitt gegenüberliegenden Ende auf einer, der ersten Oberfläche des Kontaktträgers gegenüberliegenden zweiten Oberfläche des Kontaktträgers enden. Dabei kann dieses Ende der Kontakte ebenfalls unter Vorspannung gegen die korrespondierende zweite Oberfläche des Kontaktträgers anliegen. Auf diese Weise läßt sich eine im wesentlichen koplanare Ausrichtung der jeweiligen Kontaktenden erreichen.

Die Zahl der mit einer zugehörigen Chipkarte zu kontaktierenden Kontakte kann je nach Anwendungsbereich schwanken und umfaßt beispielsweise eine Gruppe von sechs oder acht Kontakten.

Dabei kann der Kontaktträger mit einer solchen (ersten) Gruppe von Kontakten zur Kontaktierung entsprechender Kontakte einer zugehörigen Chipkarte aber auch mit mindestens einem, getrennt von der ersten Kontaktgruppe angeordneten Kontakt ausgebildet werden, der als Schaltkontakt zur Aktivierung der Kontakte der ersten Gruppe in der Endposition der Chipkarte ausgebildet ist. Auch dieser, als Schaltkontakt gestalteter Kontakt, kann wie die Kontakte der ersten Kontaktgruppe ausgebildet sein.

Nach einer weiteren Ausführungsform steht der (mindestens eine) Schaltkontakt mit seinem Kontaktabschnitt dabei über eine Oberfläche des Kontaktträgers vor, die gegenüber der ersten Oberfläche, über die die Kontakte der ersten Gruppe vorstehen, unter Ausbildung einer Anschlagkante für die Chipkarte höhenmäßig versetzt ist. Auch diese Ausführungsform wird in der nachfolgenden Figurenbeschreibung dargestellt. Dabei wird der Schaltkontakt nicht von der Chipkarte, sondern durch einen Schieber betätigt.

Aber auch im Bereich der Oberfläche des Kontaktträgers für die erste Kontaktgruppe kann eine, die Endposition einer Chipkarte definierende Anschlagkante ausgebildet sein.

Weitere Merkmale der Erfindung ergeben sich aus den Merkmalen der Unteransprüche sowie den sonstigen Anmeldungsunterlagen.

Nachstehend wird die Erfindung anhand eines Ausführungsbeispieles näher erläutert. Dabei zeigen - jeweils in schematisierter Darstellung -
- Figur 1:: eine perspektivische Ansicht eines Kontaktträgers
- Figur 2:: eine perspektivische Ansicht eines ersten Kontaktes,
- Figur 3:: eine perspektivische Ansicht eines zweiten Kontaktes.

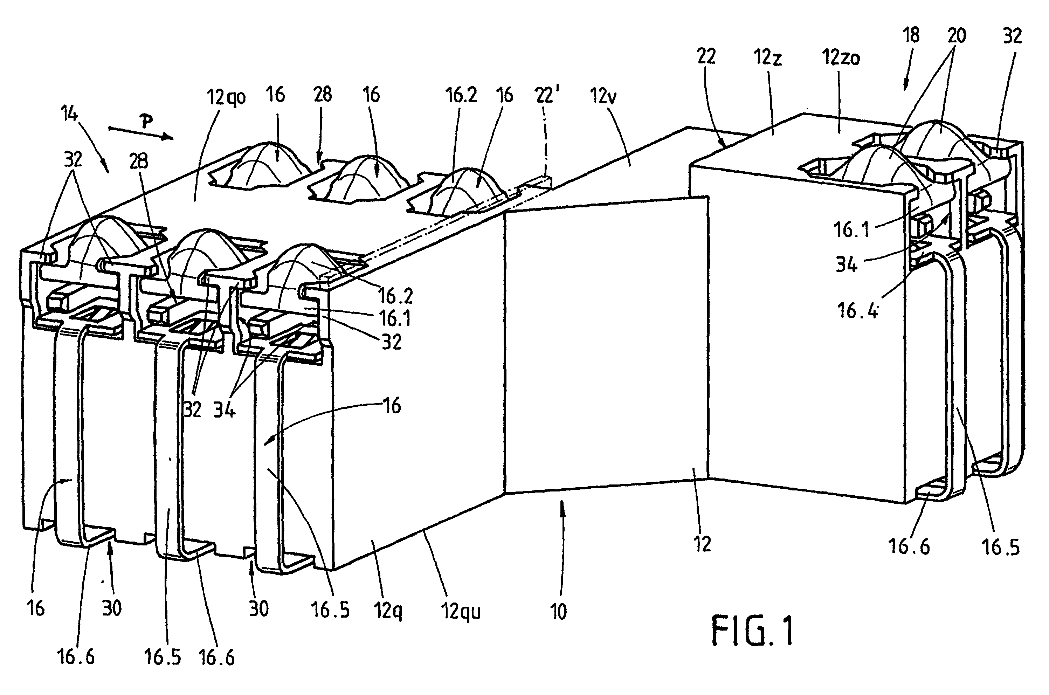

Gemäß Figur 1 besteht der Kontaktträger 10 aus einem Isolierkörper 12 aus Kunststoff, in dem eine erste Gruppe 14 von sechs Kontakten 16 und eine zweite Gruppe 18 aus zwei Kontakten 20 angeordnet ist.

Der Isolierkörper 12 umfaßt einen ersten, quaderförmigen Abschnitt 12q, der die erste Kontaktgruppe 14 aufnimmt, einen daran anschließenden Verbindungsabschnitt 12v und einen, versetzt zum Abschnitt 12q angeordneten zweiten quaderförmigen Abschnitt 12z, dessen Unterseite mit der Unterseite des Abschnitts 12q fluchtet, dessen Oberfläche 12zo jedoch über die Oberfläche 12qo des Abschnittes 12q vorsteht, wodurch eine Kante 22 ausgebildet wird, die als Anschlagkante für eine beispielsweise in Pfeilrichtung P zugeführte Chipkarte (nicht dargestellt) dient und die Endposition der Karte definiert. Diese Kante kann auch im Bereich der Oberfläche 12 qo ausgebildet werden, wie gestrichelt mit Bezugszeichen 22' in Figur 1 dargestellt.

Die Kontakte 20 der Kontaktgruppe 18 dienen dabei dazu, einen Verriegelungszustand bzw. eine Lesebereitschaft einer Chipkarte anzuzeigen, wobei die Kontakte 20 über einen (nicht dargestellten) Schieber betätigt werden, der sich parallel zur Zuführung der Chipkarte auf die Kontakte 20 absenkt.

Dabei ist die Ausbildung der Kontakte 20 und die Kontaktierung analog der Ausbildung der Kontakte 16, wie sie nachstehend beschrieben wird.

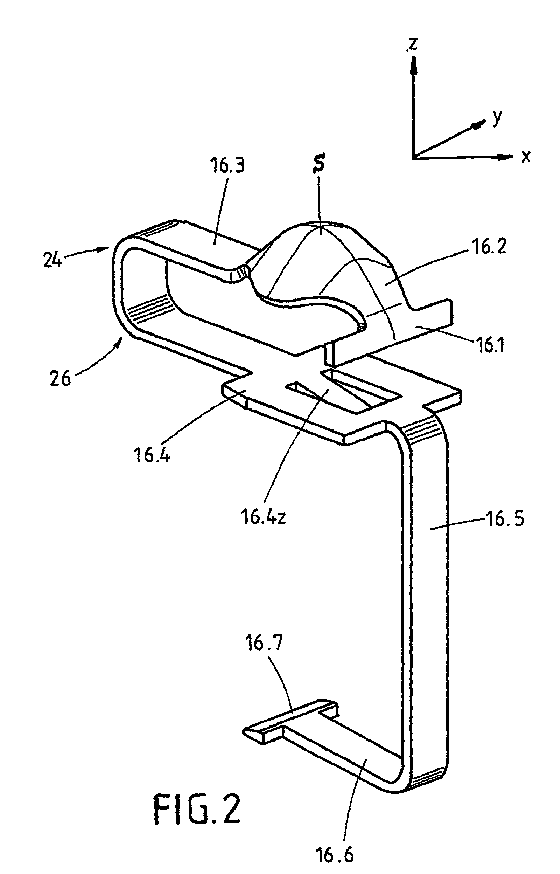

Jeder Kontakt 16 ist, wie Figur 2 zeigt, mäanderförmig gestaltet und besteht, zumindest in seinem mittleren Abschnitt, aus einem federartig gestalteten Blech.

Jeder Kontakt 16 weist an seinem oberen freien Ende einen Quersteg 16.1 auf, an den sich ein löffelartig gestalteter, in zwei Richtungen gewölbter Kontaktabschnitt 16.2 anschließt, dem ein federartiger, zweifach (bei 24, 26) umgebogener Abschnitt 16.3 folgt, der sich etwa unterhalb des Kontaktabschnitts 16.2 in einem Abschnitt 16.4 verbreitert, danach in einem um etwa 90° abgewinkelten Abschnitt 16.5 fortsetzt und nach einer weiteren Abwinklung um etwa 90° in einem Abschnitt 16.6 ausläuft, der endseitig von einem Quersteg 16.7 begrenzt ist, der sich zum freien Ende hin keilförmig verjüngt.

Korrespondierend zur Form der Kontakte 16 ist der Isolierkörper 12 gestaltet. Er umfaßt entsprechend sechs, sich in die Oberfläche 12qo und zur Seite hin öffnende Vertiefungen 28 zur Aufnahme der Abschnitte 16.1 bis 16.4 der Kontakte 16 sowie unterseitig parallel zur Unterseite 12qu verlaufende Schlitze 30, die der Aufnahme der Abschnitte 16.6., 16.7 dienen, wobei über den keilförmigen Quersteg 16.7 beim Aufsetzen des jeweiligen Kontaktes 16 eine gewisse Vorspannung in diesem Bereich erreicht wird, um die Abschnitte 16.6 der Kontakte 16 im wesentlichen koplanar zueinander anzuordnen.

Beim seitlichen Aufstecken der Kontakte 16 werden die Abschnitte 16.1 bis 16.4 in die Vertiefungen 28 geführt, wobei sich folgende Positionierung beziehungsweise Arretierung ergibt:

Der zuvor genannte Abschnitt 16.4 der Kontakte 16 weist eine nach unten federnd vorstehende Zunge 16.4z auf, die in eine korrespondierende Ausnehmung innerhalb der Vertiefung 28 einschnappt, sobald die Zunge 16.4z mit ihrem freien Ende diese Ausnehmung passiert hat.

Der Abschnitt 16.3 wird im Bereich der Vertiefung 28 in einer entsprechenden Nut geführt, so daß er im Zusammenwirken mit der Zunge 16.4z weder in Pfeilrichtung x, noch in Pfeilrichtung y bewegbar ist.

Der Quersteg 16.1 läuft beim Einsetzen des Kontaktes 16 auf seitliche Nasen 32 im Bereich der Vertiefung 28 auf, wodurch sich nicht nur eine entsprechende Vorspannung und Positionierung in Pfeilrichtung Z für das freie Ende des Kontaktes 16 ergibt, sondern gleichzeitig auch eine Positionierung des Kontaktes 16 in Pfeilrichtung y durch die seitlichen Führungswände 34 im Bereich der Vertiefungen 28.

Bei dieser Ausführungsform kann eine Chipkarte sowohl in x- wie in y-Richtung zugeführt werden, ohne daß die Gefahr besteht, daß die Kontakte und insbesondere deren Kontaktabschnitte 16.2 sich seitlich verschieben und damit eine sichere Kontaktierung erschweren oder sogar verhindern.

Dies ermöglicht es, die Chipkarte beispielsweise um 90° versetzt zu der "üblichen" Zuführrichtung der Chipkarte zuzuführen, wie dies mit der Pfeilrichtung P in Figur 1 gezeigt wird.

Die Bewegbarkeit der Kontakte 16 ist in Pfeilrichtung z (Figur 2) beschränkt, wobei die entsprechende z-Achse durch den Scheitelpunkt S der Kontaktabschnitte 16.2 verläuft und damit senkrecht zur Oberfläche 12qo des Kontaktträgers 10.

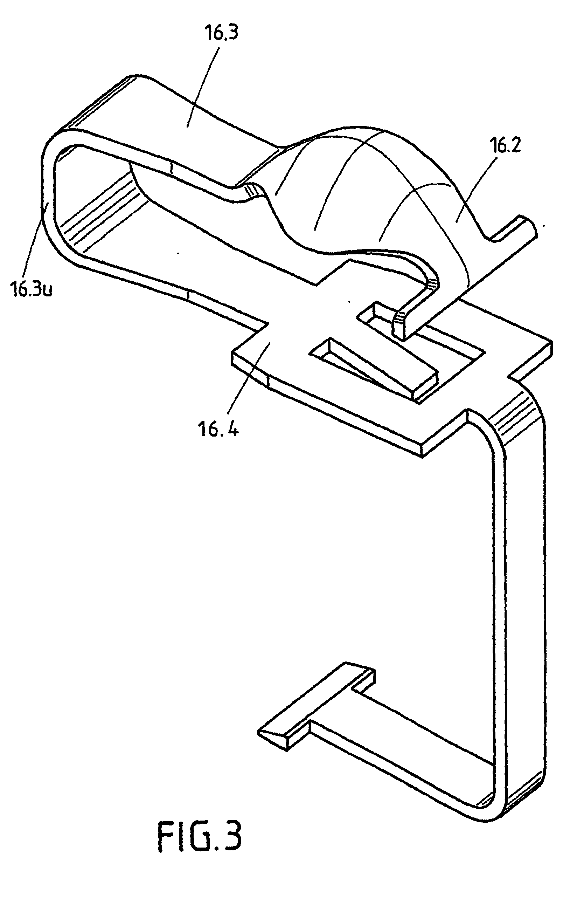

Beim Ausführungsbeispiel nach Figur 3 weist der Kontakt 16 einen gegenüber den benachbarten Kontaktabschnitten 16.2, 16.4 verbreiterten Abschnitt 16.3 auf, wobei sich die Verbreiterung jeweils in Richtung auf den umgebogenen Mittelteil 16.3u vergrößert und im Bereich des Mittelteils 16.3u konstant ist.

## Patentansprüche

1. Kontaktträger mit mehreren Kontakten (16), die jeweils mit einem löffelartig gewölbten Kontaktabschnitt (16.2) über eine erste Oberfläche (12qo) des Kontaktträgers (10) vorstehen, **dadurch gekennzeichnet,**
**daß** mindestens ein, an dem jeweiligen Kontaktabschnitt (16.2) anschließender Führungsabschnitt (16.1, 16.3) jedes Kontaktes (16) so gestaltet und im Kontaktträger (10) geführt ist, daß die Kontakte (16) ausschließlich entlang einer im wesentlichen senkrecht durch einen Scheitelpunkt (S) des jeweiligen Kontaktabschnitts (16.2) verlaufenden Achse bewegbar sind.

2. Kontaktträger nach Anspruch 1, bei dem die Kontakte (16) auf einer Seite des Kontaktabschnitts (16.2) mit einem ersten Führungsabschnitt (16.3) ausgebildet sind, der in einer ersten Führungsaufnahme des Kontaktträgers (10) einliegt, die den betreffenden Kontakt (16) in einer Richtung führt, die entlang zu der durch den Scheitelpunkt (S) des Kontaktabschnittes (16.2) verlaufenden Achse verläuft und in Verlängerung des ersten Führungsabschnitts (16.3) auf der gegenüberliegenden Seite des Kontaktabschnitts (16.2) mit einem zweiten Führungsabschnitt (16.1) ausgebildet sind, der in einer zweiten Führungsaufnahme (28, 34) des Kontaktträgers (10) einliegt, die den betreffenden Kontakt (16) in eine Richtung entlang zur Führungsrichtung des ersten Führungsabschnitts (16.3), jedoch in derselben Ebene, führt.

3. Kontaktträger nach Anspruch 2, bei dem der zweite Führungsabschnitt (16.1) senkrecht zum ersten Führungsabschnitt (16.3) verläuft.

4. Kontaktträger nach Anspruch 2, bei dem die Kontaktabschnitte (16.2) mit angeschlossenen Führungsabschnitten (16.1, 16.3) vorgespannt im Kontaktträger (10) konfektioniert sind.

5. Kontaktträger nach Anspruch 2, bei dem die zweiten Führungsabschnitte (16.1) der Kontakte (16) jeweils ein freies Kontaktende bilden.

6. Kontaktträger nach Anspruch 1, bei dem die Kontakte (16), ausgehend von ihrem mit dem Kontaktabschnitt (16.2) ausgebildeten ersten Ende mäanderförmig gestaltet sind.

7. Kontaktträger nach Anspruch 6, bei dem die Kontakte (16) außerhalb ihrer Kontakt- und Führungsabschnitte (16.1, 16.2, 16.3) über Rastmittel (16.4z) im Kontaktträger (10) positioniert sind.

8. Kontaktträger nach Anspruch 1, bei dem die Kontakte (16) mit ihrem, dem jeweiligen Kontaktabschnitt (16.2) gegenüberliegenden zweiten Ende (16.6, 16.7) auf einer, der ersten Oberfläche (12qo) des Kontaktträgers (10) gegenüberliegenden zweiten Oberfläche (12qu) des Kontaktträgers (10) enden.

9. Kontaktträger nach Anspruch 8, bei dem das zweite Ende (16.6, 16.7) der Kontakte (16) unter Vorspannung gegen die korrespondierende zweite Oberfläche (12qu) des Kontaktträgers (16) anliegt.

10. Kontaktträger nach Anspruch 1, mit einem Anschlag (22') im Bereich der ersten Oberfläche (12qo) zur Definition einer Endposition einer zugeführten Chipkarte.

11. Kontaktträger nach Anspruch 1 mit einer ersten Gruppe (14) von Kontakten (16) zur Kontaktierung entsprechender Kontakte einer zugehörigen Chipkarte und mindestens einem, getrennt von der ersten Kontaktgruppe (14) angeordneten Kontakt (20), der als Schaltkontakt zur Aktivierung der Kontakte (16) der ersten Gruppe (14) in der Endposition der Chipkarte ausgebildet ist.

12. Kontaktträger nach Anspruch 11, bei dem der mindestens eine Schaltkontakt (20) um 90° versetzt zur ersten Gruppe (14) von Kontakten (16) verläuft.

13. Kontakttäger nach Anspruch 11, bei dem der mindestens eine Schaltkontakt (20) mit seinem Kontaktabschnitt über eine Oberfläche (12zo) des Kontaktträgers (10) vorsteht, die gegenüber der ersten Oberfläche (12qo), über die die Kontakte (16) der ersten Gruppe (14) vorstehen, unter Ausbildung einer Anschlagkante (22') für die Chipkarte höhenmäßig versetzt ist.

14. Kontaktträger nach Anspruch 1, bei dem die Kontakte (16, 20) außerhalb ihrer Kontakt- und Führungsabschnitte (16.1, 16.2, 16.3) zumindest abschnittweise mechanisch fixiert angeordnet sind.

15. Kontaktträger nach Anspruch 1, bei dem die Kontakte (16, 20) zwischen einem Anschlußbereich zu ihrem Kontaktabschnitt (16.2) und ihrem dem Kontaktabschnitt (16.2) abgewandten Ende (16.6, 16.7) zumindest abschnittweise verbreitert sind.

## Claims

1. A contacts carrier having several contacts (16), each of which having a spoon-like arched contact portion (16.2) projecting beyond a first surface (12qo) of the contacts carrier (10), **characterized in that** at least one guide portion (16.1, 16.3) of each contact (16), joined to the respective contact portion (16.2) is designed and guided in the contacts carrier (10) in such a manner that the contacts (16) are movable along an axis only, extending substantially in a perpendicular direction through a vertex (S) of the respective contact portion (16.2).

2. The contacts carrier according to claim 1, wherein the contacts (16) are formed at one side of the contact portion (16.2) having a first guide portion (16.3) being positioned within a first guide seat of the contacts carrier (10), which guides the corresponding contact (16) in a direction extending along the axis extending through the vertex (S) of the contact portion (16.2), and are formed in a prolongation of the first guide portion (16.3) and at the opposite side of the contact portion (16.2) having a second guide portion (16.1) positioned within a second guide seat (28, 34) of the contacts carrier (10), which guides the corresponding contact (16) in a direction along the guiding direction of the first guide portion (16.3) but in the same plane.

3. The contacts carrier according to claim 2, wherein the second guide portion (16.1) extends orthogonally to the first guide portion (16.3).

4. The contacts carrier according to claim 2, wherein the contact portions (16.2) with the joined guide portions (16.1, 16.3) are fabricated in the contacts carrier (10) in a pre-stressed manner.

5. The contacts carrier according to claim 2, wherein each of the second guide portions (16.1) of the contacts (16) forms a free contact end.

6. The contacts carrier according to claim 1, wherein the contacts (16) have a meander-like shape, starting from their first end formed with the contact portion (16.2).

7. The contacts carrier according to claim 6, wherein the contacts (16) are positioned in the contacts carrier (10) outside their contact and guide portions (16.1, 16.2, 16.3) via catch means (16.4z).

8. The contacts carrier according to claim 1, wherein the contacts (16) terminate with their second end (16.6, 16.7) opposite the respective contact portion (16.2) on a second surface (12qu) of the contacts carrier (10), opposite the first surface (12qo) of the contacts carrier (10).

9. The contacts carrier according to claim 8, wherein the second end (16.6, 16.7) of the contacts (16) is positioned under pre-stress against the corresponding second surface (12qu) of the contacts carrier (16).

10. The contacts carrier according to claim 1, having a stop (22') in the region of the first surface (12qo) for defining an end position of a supplied smart card.

11. The contacts carrier according to claim 1, having a first group (14) of contacts (16) for contacting corresponding contacts of an associated smart card and at least one contact (20) being arranged separately from the first group (14) of contacts, which is formed as a switching contact for activating the contacts (16) of the first group (14) in the end position of the smart card.

12. The contacts carrier according to claim 11, wherein the at least one switching contact (20) extends being offset by 90° from the first group (14) of contacts (16).

13. The contacts carrier according to claim 11, wherein the at least one switching contact (20) has its contact portion projecting beyond a surface (12zo) of the contacts carrier (10), which is offset in height with respect to the first surface (12qo) beyond which the contacts (16) of the first group (14) project, forming a stopping edge (22) for the smart card thereby.

14. The contacts carrier according to claim 1, wherein the contacts (16, 20) are arranged outside their contact and guide portions (16.1, 16.2, 16.3) in mechanically fixed manner, at least in portions.

15. The contacts carrier according to claim 1, wherein the contacts (16, 20) are widened between a region of connection to their contact portion (16.2) and their end (16.6, 16.7) opposite the contact portion (16.2), at least in portions.

## Revendications

1. Support de contact avec plusieurs contacts (16), qui dépassent respectivement avec une section de contact bombée en forme de cuiller (16.2) au-dessus d'une première surface (12qo) du support de contact (10), **caractérisé en ce qu'**au moins une section de guidage (16.1, 16.3) de chaque contact (16) placée à la suite de la section de contact respective (16.2) est conçue et est guidée dans le support de contact (10) de telle manière que les contacts (16) puissent être déplacés exclusivement le long d'un axe s'étendant sensiblement dans le sens perpendiculaire à travers un point de sommet (S) de la section de contact respective (16.2).

2. Support de contact selon la revendication 1, **caractérisé en ce que** les contacts (16) sont formés d'un côté de la section de contact (16.2) avec une première section de guidage (16.3), qui repose dans un premier réceptacle de guidage du support de contact (10), qui guide le contact correspondant (16) dans une direction longeant l'axe s'étendant à travers le point de sommet (S) de la section de contact (16.2), et **en ce que** ces contacts (16) présentent, dans le prolongement de la première section de guidage (16.3), sur le côté opposé de la section de contact (16.2), une deuxième section de guidage (16.1), qui repose dans un deuxième réceptacle de guidage (28, 34) du support de contact (10), qui guide le contact correspondant (16) dans une direction longeant la direction de guidage de la première section de guidage (16.3), mais en le guidant toutefois dans le même plan.

3. Support de contact selon la revendication 2, **caractérisé en ce que** la deuxième section de guidage (16.1) s'étend perpendiculairement à la première section de guidage (16.3).

4. Support de contact selon la revendication 2, **caractérisé en ce que** les sections de contact (16.2) munis des sections de guidage (16.1, 16.3) sont confectionnées avec une précontrainte dans le support de contact (10).

5. Support de contact selon la revendication 2, **caractérisé en ce que** les deuxièmes sections de guidage (16.1) des contacts (16) forment respectivement une extrémité libre de contact.

6. Support de contact selon la revendication 1, **caractérisé en ce** les contacts (16), en partant de leur première extrémité formant la section de contact (16.2), sont réalisés sous forme de méandre.

7. Support de contact selon la revendication 6, **caractérisé en ce qu'**en dehors de leurs sections de contact et de guidage (16.1, 16.2, 16.3), les contacts (16) sont positionnés dans le support de contact (10) au moyen d'éléments d'encliquetage (16.4z).

8. Support de contact selon la revendication 1, **caractérisé en ce que** les contacts (16) s'arrêtent, avec leur deuxième extrémité (16.6, 16.7) opposée à la section de contact respective (16.2), sur une deuxième surface (12qu) du support de contact (10) opposée à la première surface (12qo) du support de contacts (10).

9. Support de contact selon la revendication 8, **caractérisé en ce que** la deuxième extrémité (16.6, 16.7) des contacts (16) repose avec une précontrainte contre la deuxième surface correspondante (12qu) du support de contact (16).

10. Support de contact selon la revendication 1, **caractérisé en ce qu'**il comprend une butée (22') dans la zone de la première surface (12qo) pour définir une position extrême d'une carte à puce rapportée.

11. Support de contact selon la revendication 1, **caractérisé en ce qu'**il comprend un premier groupe (14) de contacts (16) pour assurer le contact avec des contacts correspondants d'une carte à puce associée et au moins un autre contact (20) disposé séparément du premier groupe de contacts (14), qui est conçu comme contact de commutation pour l'activation des contacts (16) du premier groupe (14) dans la position extrême de la carte à puces.

12. Support de contact selon la revendication 11, **caractérisé en ce qu'**au moins un contact de commutation (20) est disposé avec un décalage de 90° par rapport au premier groupe (14) de contacts (16).

13. Support de contact selon la revendication 11, **caractérisé en ce que** la section de contact d'au moins un contact de commutation (20) dépasse d'une surface (12zo) du support de contact (10) qui, par rapport à la première surface (12qo), au-dessus de laquelle dépassent les contacts (16) du premier groupe (14), est décalée en hauteur en formant un bord de butée (22') pour la carte à puce.

14. Support de contact selon la revendication 1, **caractérisé en ce qu'**en dehors de leurs sections de contact et de guidage (16.1, 16.2, 16.3), les contacts (16, 20) sont, au moins par sections, disposés avec une fixation mécanique.

15. Support de contact selon la revendication 1, **caractérisé en ce qu'**entre une zone de raccordement avec leur section de contact (16.2) et leur extrémité (16.6, 16.7) opposée à la section de contact (16.2), les contacts (16, 20) sont élargis au moins par sections.
